# EUROPEAN PATENT SPECIFICATION

(11) **EP 0 330 409 B1**
(45) Date of publication and mention of the grant of the patent: **26.04.1995**
(21) Application number: 89301634.5
(22) Date of filing: 20.02.1989
(51) Int. Cl.: F16H 61/00

(54) **An engine brake control device for an automatic transmission**
Motorbremssteuervorrichtung für automatische Getriebe
Dispositif de commande de freinage moteur pour transmission automatique

(30) Priority: 23.03.1988 JP 70157/88; 20.02.1988 JP 37882/88
(43) Date of publication of application: 30.08.1989
(73) Proprietor: AISIN AW CO., LTD., Anjo-shi Aichi-ken (JP); TOYOTA JIDOSHA KABUSHIKI KAISHA, Aichi-ken 471 (JP)
(72) Inventor: Ishikawa, Kazunori, Anjo-shi Aichi-ken (JP); Tsukamoto, Kazumasa, Anjo-shi Aichi-ken (JP); Taniguchi, Takuji, Anjo-shi Aichi-ken (JP); Kashihara, Yuji, Toyota-shi Aichi-ken (JP); Iwatsuki, Kunihiro, Toyota-shi Aichi-ken (JP); Taniguchi, Hiroji, Toyota-shi Aichi-ken (JP)
(74) Representative: Gordon, Michael Vincent

(56) References cited:
- EP-A- 0 214 467
- JP-A- 6 217 452
- JP-A- 6 277 245

## Description

The present invention relates to a hydraulic control device for an automatic transmission used with an engine, in particular to a hydraulic control device for an automatic transmission mounted on an automobile, and in detail to an engine-brake control device to control the hydraulic pressure of a brake hydraulic servo for a brake directly restraining an element of a shift gear mechanism.

Conventionally, an automatic transmission effects an engine-brake, at a second range (or S range) or an L range, by actuating a second-coast brake (at 2nd speed) to restrain a front and rear sun gear, or by actuating a first & reverse brake (at lst speed).

Generally, hydraulic servos for the second-coast brake and the first & reverse brake are applied with a modulator pressure from a second-coast modulator valve or a low-coast modulator valve.

As shown in the JP-A-62-77245 & US-A-4782724, with reference to an exhaust brake attached automatic transmission, an engine-brake control device has been proposed in which a line pressure is led to a low-coast modulator valve through a governor valve to vary a hydraulic pressure for the engine-brake according to vehicle speed.

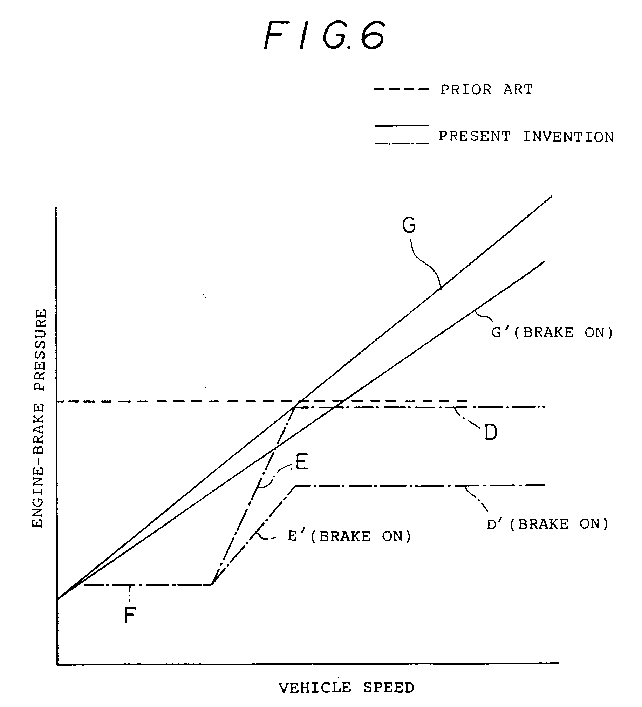

The above-mentioned modulator valve reduces the line pressure and supplies it to the hydraulic servos of the second-coast brake and the first & reverse brake so that shift shock is reduced - however, in the modulator valve, as shown in Fig. 6 by dotted lines, the pressure is constantly reduced regardless of vehicle speed.

Consequently, even if a manual valve is shifted to the second range or the L range at high speed, the engine-brake is not sufficiently actuated because the second-coast brake or the first & reverse brake are not provided with enough torque capacities. On the other hand, when a vehicle is running at low speed, the brake torque is too large for the vehicle inertia force based on the low speed running, so that the engine-brake is too much actuated. Consequently, shifting operation is quite laborious, and riding comfort is poor because operation of the engine-brake is delayed at high speed running and works strongly at low speed running.

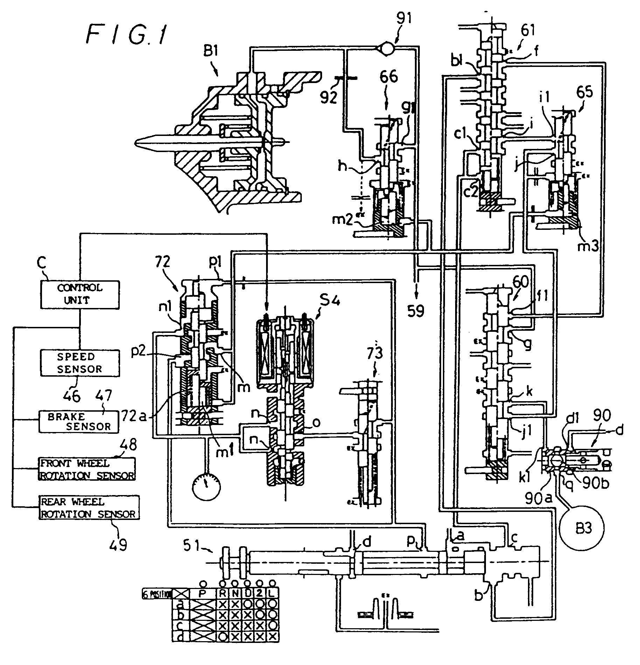

With reference to the above-mentioned device which varies the hydraulic pressure for the brake servo according to vehicle speed by the governor valve, as shown in Fig. 1O, a brake torque capacity X based on the governor valve is designed to be small at middle speed area Q because of a centrifugal force working on a governor weight, while the torque capacity is designed to be large at high speed area R. Subsequently, the brake torque capacity against necessary engine-brake torque capacity Y is not enough, so that a slip occurs. At the high speed area R, the brake torque capacity is too large against the necessary engine-brake torque capacity Y, so that sharp shift shock occurs.

When a foot brake is applied with the engine-brake, in particular, if the hydraulic pressure of engine-brake hydraulic servo is designed to be varied by a vehicle speed, the driving wheels may lock. Furthermore, when a vehicle runs on roads having a low coefficient of friction such as snow covered roads, the driving wheels may slip because the engine-brake torque capacity is too large.

It is also known from US-A-4770066, acknowledged in the pre-characterising portion of the present main claim, for there to be an engine brake control device in an automatic transmission of a vehicle having a transmission mechanism including a plurality of gear elements, a brake operative to engage and restrain one of said elements to effect an engine brake, a hydraulic servo associated with said brake for controlling said brake to engage and release said one of said elements, and a shift valve operatively hydraulically connected to said servo for allowing hydraulic fluid to be supplied to or drained from said servo, said engine brake control device for controlling the force at which the brake is controlled by the hydraulic servo to engage said one of said elements and effect the engine brake, said device comprising:
a modulator valve operatively hydraulically connected between said shift valve and said hydraulic servo for modulating the pressure of hydraulic fluid supplied to said servo from said shift valve;
a pressure control valve operatively hydraulically connected to said modulator valve for providing a selective control of the modulator valve that establishes the modulated pressure of the hydraulic fluid supplied to said servo from said shift valve;
first sensor means for sensing one running condition of the vehicle and for issuing signals indicative of said one running condition;
second sensor means for sensing another running condition of the vehicle and for issuing signals indicative of said another running condition; and
an electronic control unit operatively connected to said pressure control valve and to said first and said second sensor means for receiving the signals issued by said first and said second sensor means, and for issuing signals based on the signals received to said pressure control valve which control said pressure control valve to provide the selective control of said modulator valve.

The present invention is characterised in that said first and said second sensor means sense running conditions of the vehicle from the group including the speed of the vehicle, the application of a foot brake in the vehicle, and the state of rotation of wheels in the vehicle.

Said modulator valve may include an input port in hydraulic communication with said shift valve, an output port in hydraulic communication with said hydraulic servo, a spool movable between respective positions at which said input and said output ports are open to and closed from one another, a spring for biasing the spool in one direction, a first chamber open to said output port at a location adjacent the spool at which pressure in the first chamber acts on the spool against said spring, and a second chamber in hydraulic communication with said pressure control valve at a location adjacent the spool at which pressure in the second chamber acts on the spool with said spring.

Alternatively, said modulator valve may include an input port in hydraulic communication with said shift valve, an output port in hydraulic communication with said hydraulic servo, a spool movable between respective positions at which said input and said output ports are open to and closed from one another, a movable plug, a spring extending between said plug and said spool, a first chamber open to said output port at a location adjacent the spool at which pressure in the first chamber acts on the spool against said spring, and a second chamber in hydraulic communication with said pressure control valve at a location adjacent the spool at which pressure in the second chamber also acts against said spring, one end of said plug contacting a valve body at a surface thereof which limits movement of said plug within said valve body.

Said pressure control valve may be a linear solenoid valve.

Said first sensor means may sense the speed of the vehicle, and said control unit may control said pressure control valve to provide a selective control of said modulator valve in which said modulator valve modulates the pressure of the hydraulic fluid supplied to said servo to a high pressure when the vehicle is travelling at a speed greater than a predetermined speed and to a low pressure that is less than said high pressure when the vehicle is travelling at a speed that is less than said predetermined speed.

Said second sensor means may sense the application of a foot brake in the vehicle, and said control unit may control said pressure control valve to provide a selective control of said modulator valve in which said modulator valve modulates the pressure of the hydraulic fluid supplied to said servo to a low pressure when the application of the foot brake is sensed by said second sensor means.

Alternatively, said first sensor means may sense the state of rotation of one of the front set of wheels and the rear set of wheels in the vehicle, and said second sensor means may sense the state of rotation of the other of the front set of wheels and the rear set of wheels.

Said first sensor means may sense the state under which a non-driven wheel rotates and said second sensor means may detect the state under which a positively driven wheel of the vehicle rotates.

Said control unit may calculate a difference between the state of rotation of the front and the rear sets of wheels, and may control said pressure control valve to provide a selective control of said modulator valve in which said modulator valve modulates the pressure of the hydraulic fluid supplied to said servo to a low pressure when said difference is a large predetermined amount and to a high pressure greater than said low pressure when said difference is small compared to said predetermined amount.

Finally, an accumulator control valve may be operatively hydraulically connected between said modulator valve and said pressure control valve.

In a preferred embodiment, described in more detail hereinafter, there is a hydraulic control device for an automatic transmission including a brake directly restraining a certain element of a shift gear mechanism, a hydraulic servo to control the brake, a shift valve to supply or drain the hydraulic pressure of the brake servo, and a modulator valve situated in oil passages connected to the hydraulic servo, the modulator valve being controlled by a pressure control valve which is controlled by signals from a control unit, where the signals are produced based on vehicle running conditions.

More concretely, a speed sensor sends signals to the control unit, which dispatches signals to the pressure control valve so that the hydraulic pressure of the hydraulic servo is kept low when vehicle speed is low, while the hydraulic pressure of the servo is kept high when vehicle speed is high.

The control unit receives signals from a brake sensor, which detects operation of a foot brake, in addition to the signals from the speed sensor so that when the foot brake is applied the pressure control valve is controlled to reduce the hydraulic pressure of the servo, which is varied according to vehicle speed.

The control unit receives signals from a front wheel rotation detecting sensor and a rear wheel rotation detecting sensor and calculates the difference of rotation so that the pressure control valve keeps the hydraulic pressure of the servo low when rotation difference between the front and the rear wheels is large, while the pressure control valve keeps the hydraulic pressure of the servo high when rotation difference between the wheels is small.

Furthermore, for example, the brakes are a second-coast brake which is actuated at the second speed of ranges other than D range, and a first & reverse brake which is actuated at the first speed. To the second-coast brake hydraulic servo, a line pressure is applied from a port from which the line pressure is applied at the second range and L range of a manual valve, through ports of a 2-3 shift valve, ports of a 1-2 shift valve, and ports of a second-coast modulator valve. Hydraulic pressure from the servo is drained from a check ball without passing through the modulator valve. On the other hand, to the first & reverse brake hydraulic servo, a line pressure is applied from a port from which the line pressure is applied at the L range of the manual valve, through ports of the 2-3 shift valve, ports of the low-coast modulator valve, ports of the 1-2 shift valve, and a check ball.

The second-coast modulator valve has a control chamber where control hydraulic pressure from a port of an accumulator control valve is applied, and the low-coast modulator valve has a control chamber where control hydraulic pressure from a port of the accumulator control valve is applied. The accumulator control valve has a port where hydraulic pressure is applied from ports of the pressure control valve which is controlled by electric signals of the control unit which receives the signals from the speed sensor, the brake sensor, and the front and rear wheel rotation sensors. Consequently, regulated pressure is applied so that the line pressure is regulated and such regulated pressure is taken out from the accumulator control valve. Another port of the pressure control valve is applied with reduced pressure from a solenoid modulator valve.

Based on the above structure, when engine-brake is actuated by the brake, the regulated hydraulic pressure through the modulator valve which is controlled by the pressure control valve is applied to the brake hydraulic servo. At this time, the solenoid valve is controlled by signals based on a vehicle running condition such as the speed sensor. Accordingly, high hydraulic pressure is applied when a vehicle runs at high speed, while low hydraulic pressure is applied when a vehicle runs at low speed. Because of this procedure, the engine-brake force is adequately controlled according to a vehicle speed.

Furthermore, the following provisions are also possible: due to the signal of the brake sensor, the hydraulic pressure according to a vehicle speed is kept low when the foot brake is applied, and due to the signals of the front and rear wheel rotation sensors, the control unit calculates rotation difference, and the engine-brake force is kept low when the rotation difference between the front and rear wheels is large.

More concretely, when the engine-brake is applied at the second speed condition by shifting the manual valve to the second range, the line pressure from a port of the manual valve is applied to a port of the second-coast modulator valve through ports of the 2-3 shift valve, and ports of the 1-2 shift valve. Moreover, the hydraulic pressure is regulated based on the control pressure of a control chamber, and the regulated pressure is applied to the second-coast brake hydraulic servo. At this time, the pressure control valve is controlled by the signals from the control unit where signals from each of the sensors are sent. Then hydraulic pressure applied to a port of the solenoid valve is regulated and taken out from other ports. Subsequently, the pressure from said other ports is applied to a port of the accumulator control valve where the line pressure is regulated, and the regulated hydraulic pressure is applied from the accumulator control valve to a control chamber of the second-coast modulator valve. Due to the above operations, an engine-brake hydraulic pressure is generated, having three areas: - high constant pressure for high speed condition which is more than certain speed; - hydraulic pressure is reduced proportional to a vehicle speed; - low constant pressure for low speed condition. Engine-brake hydraulic pressure which is proportional to a vehicle speed is generated.

When the engine-brake is applied at the first speed by shifting the manual valve to the L range, the line pressure is applied from the manual valve to a port of the low-coast modulator valve through ports of the 2-3 shift valve. In said valve, the line pressure is regulated based on the control pressure of a control chamber and applied to the first & reverse brake hydraulic servo. At this time, as stated before, the control pressure is generated by the pressure control valve and the accumulator control valve, and then the engine-brake hydraulic pressure is also generated.

The means to control the modulator valve is not limited to the accumulator control valve - it is of course possible to connect a regulated pressure generating means such as a linear solenoid valve directly to a control chamber of the modulator valve.

In the drawings:
Fig. l is a hydraulic circuit diagram of a main part of an engine-brake control device for an automatic transmission, which relates to the present invention;
Fig. 2 is a total cross-sectional view of the automatic transmission to which the present invention is applied;
Fig. 3 is a schematic representation of the automatic transmission;
Fig. 4 is a hydraulic circuit diagram of the automatic transmission;
Fig. 5 is a table of operation of solenoid valves, clutches, brakes and one-way clutches at each shifting position;
Fig. 6 is a graphical representation showing engine-brake hydraulic pressure vs. vehicle speed;
Fig. 7 is a graphical representation of engine-brake skid control;
Fig. 7(a) is a graphical representation showing time vs. front and rear wheel rotational speed;
Fig. 7(b) is a graphical representation showing time vs. hydraulic pressure of a hydraulic servo;
Fig. 8 is a hydraulic circuit diagram which is a partial modification of that shown in Fig. 1;
Fig. 9 is a cross-sectional view of a second-coast modulator valve which is a partial modification of that shown in Fig. 1; and

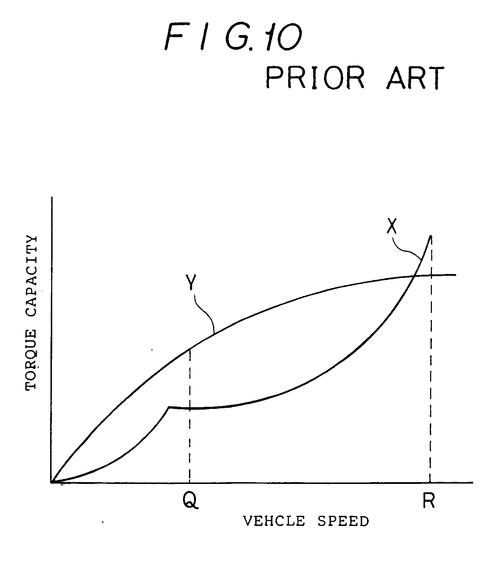

Fig. 10 is a graphical representation of an enginebrake characteristic influenced by a governor valve.

The present invention will now be explained along with the drawings.

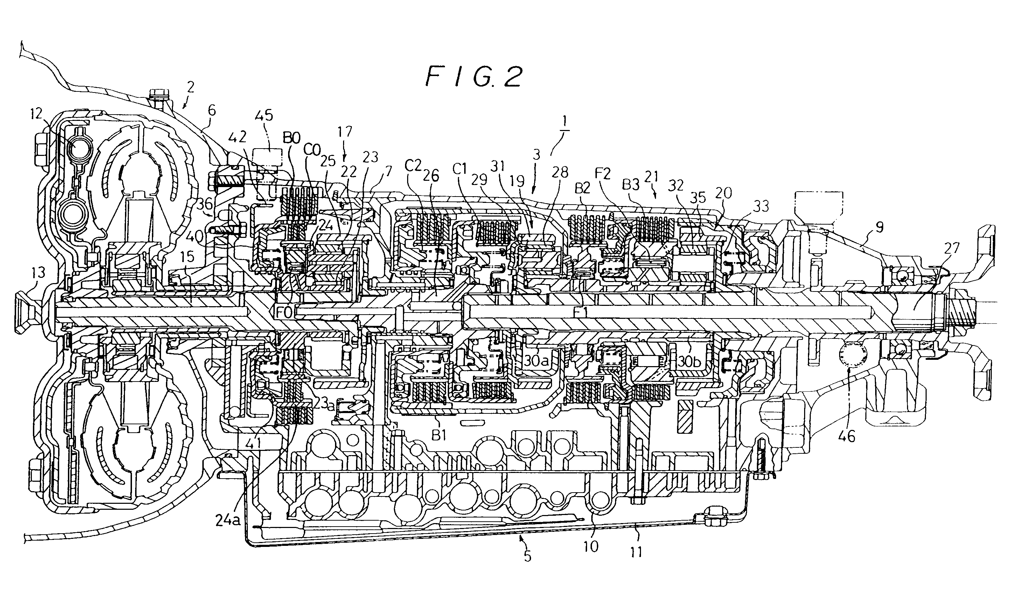

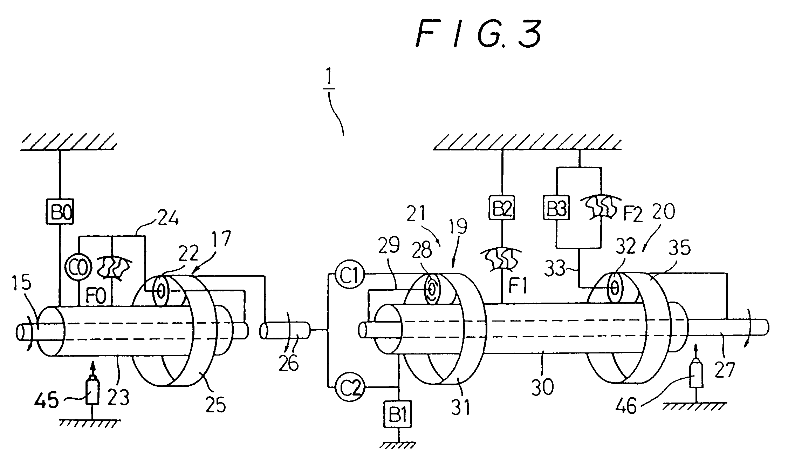

An automatic transmission 1, as shown in Figs. 2 and 3, has a torque converter 2, a planetary transmission gear mechanism 3 and a hydraulic control device 5 which are housed in a converter housing 6, a transmission case 7, an extension housing 9, a valve body 10 and an oil pan 11. The torque converter 2 has a lock-up clutch 12, so that rotation of an input member 13 is transmitted to an input shaft 15 of the transmission gear mechanism 3 through hydraulic flow in the torque converter 2 or through the lock-up clutch 12. The gear mechanism 3 comprises an over-drive planetary gear unit 17 and a main transmission unit 21 including a front planetary gear unit 19 and a rear planetary gear unit 20. The over-drive planetary gear unit 17 comprises a planetary pinion 22, a carrier 24 which is directly connected to the input shaft 15 and supports the pinion 22, a sun gear 23 which encloses the input shaft 15, and a ring gear 25 which is connected to an input shaft 26 of the main transmission unit 21. An over-drive direct clutch CO and a one-way clutch FO are situated between the carrier 24 and the sun gear 23, and an over-drive brake BO is situated between the sun gear 23 and the case 7. The front planetary gear unit 19 comprises a planetary pinion 28, a carrier 29 which is directly connected to an output shaft 27 and supports the pinion 28, a sun gear 30a which encloses the output shaft 27 and is constituted integrally with a sun gear 30b of the rear planetary gear unit 20, and a ring gear 31 which is connected to the input shaft 26 through a forward clutch Cl. A direct clutch C2 is situated between the input shaft 26 and the sun gear 30, a second-coast brake Bl composed of a band brake is situated between the sun gear 30 and the case 7, a one-way clutch Fl and a second brake B2 are radially situated between the sun gear 30 and the case 7. The rear planetary gear unit 20 comprises a planetary pinion 32, a carrier 33 which supports the pinion 32, the sun gear 30b, and a ring gear 35 which directly connects to the output shaft 27. A first & reverse brake B3 and a one-way clutch F2 are situated radially between the carrier 33 and the case 7. Incidentally, 36 in Fig.2 is an oil pump.

As shown in Fig.2, with regard to the over-drive planetary gear unit 17, the one-way clutch FO is situated between a boss 23a of the sun gear 23 and a sleeve 24a of the carrier 24. A flange member 40 which constitutes a cylinder extends from the boss 23a. The flange member 40 encloses a piston member 41 to form a hydraulic actuator of the clutch CO. The over-drive direct clutch CO is situated between the sleeve 24a and an inner surface of the flange member 40. The over-drive brake BO is situated between an outer surface of the flange member 40 and the case 7. Furthermore, a brim 42 is fixed on a peripheral part of the flange member 40. A non-contacting type sensor 45 such as one employing light or magnetism and the like is situated on the case 7 so that the sensor 45 faces plural through holes or slits which are formed in the brim 42. The sensor 45 is situated to detect the rotational speed of the input shaft 15, in other words, to detect the rotational speed of the brim 42 which rotates together with the input shaft 15 at the first, second and third speeds when the clutch CO is engaged.

A speed sensor 46 which detects vehicle speed is situated in the extension case 9. Electric signals from the sensors 45, 46 and other sensors are sent to a control unit C to control solenoid valves Sl, S2, S3 and S4 which will be explained later.

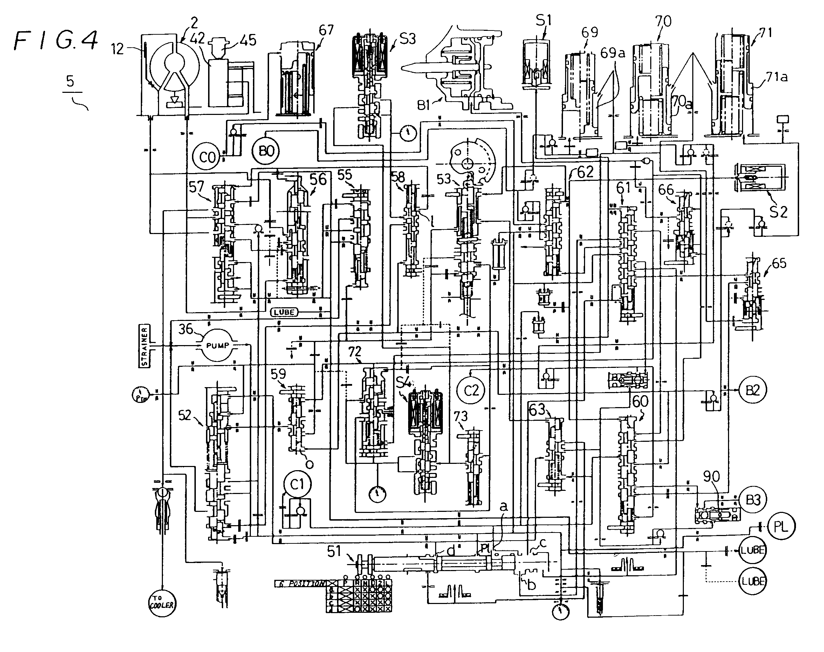

Next, however, the hydraulic control device 5 is explained along with Fig.4.

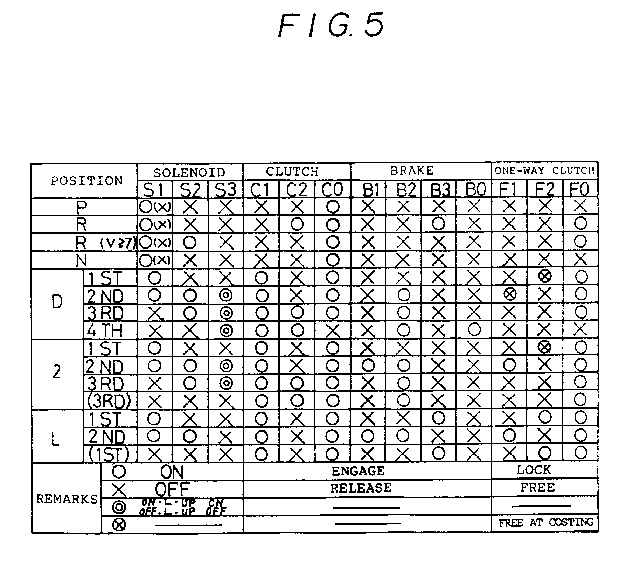

CO, Cl and C2 are hydraulic servos for each clutch, and BO, Bl, B2 and B3 are hydraulic servos for each brake. 2 is the torque converter, 36 is the oil pump, and 51 is a manual valve where a line pressure port p is connected to ports a, b, c and d which correspond to ranges of R, P, N, D, S and L, as shown in the table in Fig. 5. 52 is a primary regulator valve, 53 is a throttle valve, 55 is a secondary regulator valve, 56 is a lock-up control valve, 57 is a lock-up relay valve, 58 is a solenoid relay valve, and 59 is a cut-back valve. 60 is a 1-2 shift valve, 61 is a 2-3 shift valve, 62 is a 3-4 shift valve, 63 is a reverse inhibit valve, 65 is a low-coast modulator valve, and 66 is a second-coast modulator valve. 67 is an accumulator for the clutch CO, 70 is an accumulator for the clutch C2, and 71 is an accumulator for the brake B2. 72 is an accumulator control valve which regulates hydraulic pressure applied to back pressure chambers 69a, 70a and 71a of the accumulators 69, 70 and 71, and controls the low-coast modulator valve 65 and the second-coast modulator valve 66. Sl, S2 and S3 are solenoid valves to control the shift valves 60, 61 and 62. S4 is a linear solenoid valve, which regulates hydraulic pressure from a solenoid regulator valve 73, the regulated pressure then being applied to the accumulator control valve 72.

An engine-brake control device which is a main part of the present invention is now explained along with Fig.l.

The engine-brake control device is to control a supply of hydraulic pressure to the second-coast brake hydraulic servo Bl which operates at the second speed of the second range and the L range, and to the first & reverse brake servo B3 which operates at the first speed of the L range. The engine-brake control device includes: the second-coast modulator valve 66 and the low-coast modulator valve 65, which are situated in oil passages to the servos; the accumulator control valve 72 controlling these modulator valves; the linear solenoid valve S4 and the solenoid modulator valve 73.

The port b, in the manual valve 51, where the line pressure is applied at the second range of the manual valve 51, is connected to the port bl of the 2-3 shift valve 61. The 2-3 shift valve 61 is in an upper-half position (which means the position of the spool depicted at the right side of the spool in Fig.l) at the second speed, so that the port bl and the port f are through or connected. Furthermore, the port f is connected to the port fl of the 1-2 shift valve 60. The 1-2 shift valve 60 is in an upper-half position (which means the position of the spool depicted at the left side of the spool in Fig.l) at the second speed, so that the port fl and the port g are through or connected. The port g is connected to the port gl of the second-coast modulator valve 66. The hydraulic pressure at the port gl is regulated by control pressure in a control chamber m2, and the regulated pressure is taken from the port h to the second-coast brake hydraulic servo Bl. The drain pressure from the servo Bl is led to the port g of the 1-2 shift valve 60 through check ball 91, and is drained from the drain port EX.

The port c, in the manual valve 51, where the line pressure is applied at the L range of the manual valve 51, is connected to the port cl of the 2-3 shift valve 61. At the first speed, the line pressure from the port c is also applied to the lower chamber c2, so that the valve 61 is in the right-half position, thus the port cl and the port i are through or connected. The port i is connected to the port il of the low-coast modulator valve 65. The pressure at the port il is regulated by control pressure of a control chamber m3, and this regulated pressure is taken from the port j to the port jl of the 1-2 shift valve 60. At the first speed, the valve 60 is in the right-half position, so that the port jl and the port k are through or connected. The hydraulic pressure from the port k is applied to the first & reverse brake hydraulic servo B3 through a check valve 90. Incidentally, the check valve 90 has a port dl which is connected to the port d of the manual valve 51, to which the line pressure is applied at the reverse range, and a port kl which is connected to the port k. By the hydraulic pressure applied at one of these ports dl, kl, a ball 90b in a sleeve 90a is moved so that the pressure is applied to the servo B3 from the port q.

On the other hand, the accumulator control valve 72 includes: a port p2 to which the line pressure is applied from port p in the manual valve 51; a first control chamber pl by which the line pressure is applied to the top of the spool; a second control chamber nl to which the control pressure from the linear solenoid valve S4 is applied; a regulating port m which regulates the line pressure of the port p2, and is connected to the control chambers m2, m3 of the second-coast modulator valve 66 and the low-coast modulator valve 65, respectively; and a feedback chamber ml within which hydraulic pressure works together with the pressure of the control chamber nl and the pressing force of a spring 72a against the line pressure in the control chamber pl. The linear solenoid valve S4 is controlled by electric signals from the control unit C which are based on the signals of speed sensor 46, brake sensor 47, front wheel rotation sensor 48 and rear wheel rotation sensor 49. The port o of the valve S4 is supplied with reduced line pressure by the solenoid modulator valve 73, the reduced line pressure being regulated in the valve S4 and output to the ports n, n. The hydraulic pressure from the ports n, n is applied to the control chamber nl of the accumulator control valve 72.

In addition to the above, as shown in Fig.4, the pressure from the port m of the accumulator control valve 72 is applied to the back pressure chambers 69a, 70a and 71a of the BO accumulator, C2 accumulator and B2 accumulator, as well as the control chambers m2, m3 of the modulator valves 66, 65. An oil passage open to the second-coast brake hydraulic servo Bl is connected to an upper control chamber r of the cut-back valve 59 so that cut-back operation by the cut-back valve 59 is stopped when the second-coast brake Bl is actuated.

The operation of the embodiment will now be explained.

The solenoid valves Sl, S2 and S3; the clutches CO, Cl and C2; the brakes BO, Bl, B2 and B3; the one-way clutches FO, Fl and F2; are operated at the positions of P, R, R(speed is more than 7 km/h), N, D, 2 and L ranges, as shown in Fig.5.

At the first speed of the D or 2 range; the solenoid valve Sl is ON, so that the over-drive direct clutch CO, the one-way clutches FO, F2 and the forward clutch Cl are engaged, other elements all being released. Accordingly, all elements of the over-drive planetary gear unit 17 rotate together through the clutch CO and the one-way clutch FO. Thus, rotation of the input shaft 15 is transmitted to the input shaft 26 of the main transmission unit 21 without reducing rotation speed. In the main transmission unit 21, rotation of the input shaft 26 is transmitted to the ring gear 31 of the front planetary gear unit 19, and is transmitted to the carrier 29 and the output shaft 27 which is integrally connected to the carrier 29. At the same time, the rotation is transmitted to the carrier 33 of the rear planetary gear unit 20, and the carrier 33 is provided with torque in the left rotational direction. However, because the carrier 33 is restrained by the one-way clutch F2, the planetary pinion 32 rotates, and this rotation is transmitted to the ring gear 35 which is integrally connected to the output shaft 27.

At the second speed of the D range; the solenoid valve S2 is ON in addition to the solenoid valve Sl. The over-drive direct clutch CO, the one-way clutch FO, the forward clutch Cl, the one-way clutch Fl and the second brake B2 are engaged, other elements all being released. Accordingly, the over-drive planetary gear unit 17 is still kept under the direct operating condition, whereby the rotation of the input shaft 15 is transmitted to the input shaft 26 without reducing rotation speed. In the main transmission unit 21, rotation of the input shaft 26 is transmitted to the ring gear 31 through the forward clutch Cl, and the sun gear 30 is provided with torque in the left rotational direction through the pinion 28. However, the sun gear 30 is restrained from rotating in the left rotational direction by the operation of the one-way clutch Fl because of engagement of the brake B2. Consequently, the planetary pinion 28 rotates and the carrier 29 rotates. Then, the rotation of the carrier 29 is directly transmitted to the output shaft 27, namely the rotation is transmitted only through the front gear unit 19 to the output shaft 27.

At this moment, when friction plates of the second brake B2 start to contact by application of hydraulic pressure to the B2 hydraulic servo, the output torque varies. As a result, the rotational speed of the flange 40 which rotates together with the input shaft 15 also varies. The varied rotation is detected by the sensor 45, and the solenoid valve S4 is controlled by the electric signals of the control unit C based on the signals of the sensor 45. Consequently, hydraulic pressure applied from the solenoid modulator valve 73 is regulated in the solenoid valve S4 and such regulated pressure is taken from the ports n, n as a certain control hydraulic pressure. The certain control pressure is applied to the port nl of the accumulator control valve 72. The control valve 72 is in the right-half position (Fig.l) due to hydraulic pressure being applied to the first control chamber pl through an orifice, and the line pressure applied to the port p2 is taken out from the port m to the back pressure chamber 71a of the accumulator 71. From the above state of the control valve 72, the control pressure from the port n1 works on a bulged section of the spool, and the pressure, with the pressing force of the spring 72a, moves the spool against the line pressure in the first control chamber pl. Consequently, the line pressure of the port p2 is reduced in accordance with the control pressure and taken out from the port m. The reduced pressure works in the feedback chamber ml on a lower part of the spool 72. At the same time, the reduced pressure is applied to the back pressure chamber 71b of the accumulator 71. Because of these actions, the accumulator back pressure is reduced by a certain amount over a certain duration of time. Furthermore, after a certain time, the accumulator back pressure is gradually reduced based on the control pressure from the linear solenoid valve S4, and the output torque smoothly varies. Thus, when shifting from the first speed to the second, a shift-shock caused by engaging the second brake B2 is reduced, so that the shift-up operation is conducted smoothly.

At the third speed of the D or second range; the solenoid valve Sl is OFF, and the over-drive direct clutch CO, the one-way clutch FO, the forward clutch Cl, the direct clutch C2 and the second brake B2 are engaged, other elements all being released. As a result, the over-drive planetary gear unit 17 is under the direct operating condition, and in the main transmission unit 21, the elements of the front planetary gear unit 19 rotate together because the clutches Cl and C2 are engaged. Thus, rotation of the input shaft 26 is transmitted to the output shaft 27 without reducing rotation speed.

The 2-3 shift valve 61 is switched due to the solenoid valve S1 being OFF, and the direct clutch C2 is engaged. At this moment, as with the B2 accumulator 71, certain hydraulic pressure is applied to the back pressure chamber 70a of the C2 accumulator 70, so that a shift-shock is reduced when shifting from the second to the third speed, the same as when shifting from the first to the second speed.

At the fourth speed of the D range, or the highest shift stage; the solenoid valve S2 is also OFF, and the forward clutch Cl, the direct clutch C2, and the second brake B2 are engaged. The main transmission unit 21, as in the third speed, is under the direct operating condition, while in the over-drive planetary gear unit 17, the direct clutch CO is released and the over-drive brake BO is engaged. Accordingly, the sun gear 23 is locked by the brake BO, and the planetary pinion 22 rotates with the carrier 24 which also rotates. The rotation is transmitted to the ring gear 25 as an over-drive rotation, and the over-drive rotation is transmitted to the input shaft 26 of the main transmission unit 21, which is under the direct operating condition.

At this time, because of the release of the direct clutch CO and the engagement of the brake BO, rotation of the brim 42 which is integrally connected to the flange 40 connected to the sun gear 23 is restrained. This state is detected by the sensor 45. Certain hydraulic pressure is applied to the back pressure chamber 69a of the BO accumulator 69, so that hydraulic pressure for the brake BO is controlled. On the other hand, in the direct clutch hydraulic servo CO, pressure rises comparatively quickly because of the accumulator 67 which is without back pressure control, so that the clutch CO is released earlier than the brake BO. However, the carrier 24 is still under the control of the one-way clutch FO regardless of the release of the clutch CO. As a result, shifting from the third speed to the fourth is performed by the engagement of the brake BO and the release of the clutch CO, and a shift-shock is reduced by the control of the BO accumulator 69.

When down-shifting from the fourth to the third speed, the over-drive direct clutch CO is engaged and the over-drive brake BO is released. When down-shifting from the third to the second speed, the direct clutch C2 is released. Furthermore, when down-shifting from the second to the first speed, the second brake B2 is released.

Under the above situation, the linear solenoid valve S4 is controlled by the electric signals from the control unit C based on the speed sensor 45. Thus, the accumulator back pressure working in the back pressure chambers 69a of the BO accumulator 69, 70a of the C2 accumulator 70 and 71a of the B2 accumulator 71 is reduced by a certain amount over a certain time. Due to this, shift-shock is reduced when down-shifting in the same manner as when up-shifting, so that all shifting operations are performed smoothly.

When the manual valve 51 is shifted to the second range; the first and third speeds are the same as those of the D range. For the second speed, the second-coast brake Bl is engaged in addition to the forward clutch Cl, the over-drive direct clutch CO and the second brake B2, so that the sun gear 30 of the main transmission unit 21 is restrained to effect the engine-brake. In other words, the line pressure from the port b which applies the line pressure at the second range of the manual valve 51 is applied to the port bl of the 2-3 shift valve 61, the ports bl and f are through or connected based on the right-half position of the shift valve 61, and from the port f, the line pressure is applied to the port gl of the second-coast modulator valve 66 through the ports fl, g of the 1-2 shift valve 60. The control unit C, responsive to the speed sensor 46, sends signals to the linear solenoid valve S4, which regulates the hydraulic pressure at the port o to be a pressure corresponding to the vehicle speed. The regulated pressure is taken out from the ports n, n to the second control chamber nl of the accumulator control valve 72. Due to the application of hydraulic pressure to the chamber nl, from the condition that the valve 72 is in the right-half position and the line pressure at the port p2 is through to the port m, the control pressure in the second control chamber nl, the pressing force of the spring 72a situated at the lower part of the spool, and the feedback pressure of the third control chamber ml work together against the line pressure in the first control chamber pl, so that the line pressure at the port p2 is reduced by a certain amount and is taken out from the port m. The hydraulic pressure of the port m is applied to the control chamber m2 of the second-coast modulator valve 66, and the hydraulic pressure from the port h is regulated, for example as shown in Fig.6 with chain line or full line, and is applied to the second-coast hydraulic servo Bl. In the case that the characteristic indicated by the chain line is employed; when a vehicle runs at comparatively high speed, high hydraulic pressure such as the line pressure and the like is applied to the control chamber m2 of the modulator valve 66, so that the valve is at the right-half position. Thus, high and constant pressure is effective (refer to the area D of Fig. 6) and the second brake Bl actuates the engine-brake with large torque capacity. When a vehicle slows down below a certain speed, application of hydraulic pressure to the hydraulic servo B1 is also reduced in proportion to the slow down of vehicle speed (refer to the area E of Fig.6), and the second-coast brake B2 actuates the engine-brake with reducing torque capacity according to a vehicle speed. When a vehicle further slows down its speed below another certain level, application of hydraulic pressure to the servo Bl is low and constant (refer to the area F of Fig. 6), and the brake Bl actuates the engine-brake smoothly with small torque capacity.

Incidentally, by the operation of the accumulator control valve 72 when the engine-brake is actuated, certain hydraulic pressure is applied to the back pressure chamber 71a of the B2 accumulator 71 - however, the application of that pressure provides no significant effects against shift-shocks.

At the second speed of the L range; it is the same as the second speed of the second range. At the first speed; the first & reverse brake B3 is engaged in addition to the forward clutch Cl and the over-drive direct clutch CO, so that the carrier 33 of the rear planetary gear unit 20 is restrained. Thus, the engine-brake is actuated. Namely, the line pressure at the port c, through which the line pressure is applied at the L range of the manual valve, is applied to the port cl of the 2-3 shift valve 61. The valve 61 is in the right-half position as a result of the line pressure in the chamber c2 at the first speed. The ports cl and i are through or connected, and from the port i the line pressure is applied to the port il of the low-coast modulator valve 65. The modulator valve 65, as stated before, is regulated by the linear solenoid valve S4 and the control pressure from the port m of the accumulator control valve 72. The regulated pressure from the port j of the valve 65 is applied to the port kl of the check ball 90 through the ports jl and k of the 1-2 shift valve 60 which is in the right-half position. Furthermore, the pressure is applied from the port q to the first & reverse brake hydraulic servo B3. At this time, by the control pressure based on the speed sensor 46, the regulated pressure from the port j of the modulator valve 65 is applied to the servo B3, for example as shown in the full line or chain line of Fig.6. In the case that the characteristic is shown by the full line, the pressure which is proportional to the slow down of vehicle speed is applied to the servo B3. Then, the brake B3 actuates the engine-brake with large torque capacity when running at high speed, and the brake B3 actuates the engine-brake with gradually reducing torque capacity corresponding to reduction of inertial force, which is reduced according to the slow down of vehicle speed.

It is possible to add the signals of the brake sensor 47 to those of the speed sensor 46 by inputing signals of the sensor 47 to the control unit C. Namely, as shown by G', E' and D' in Fig.6, in the case that the foot brake is actuated, the engine-brake pressure is designed to be low to prevent locking of the wheels.

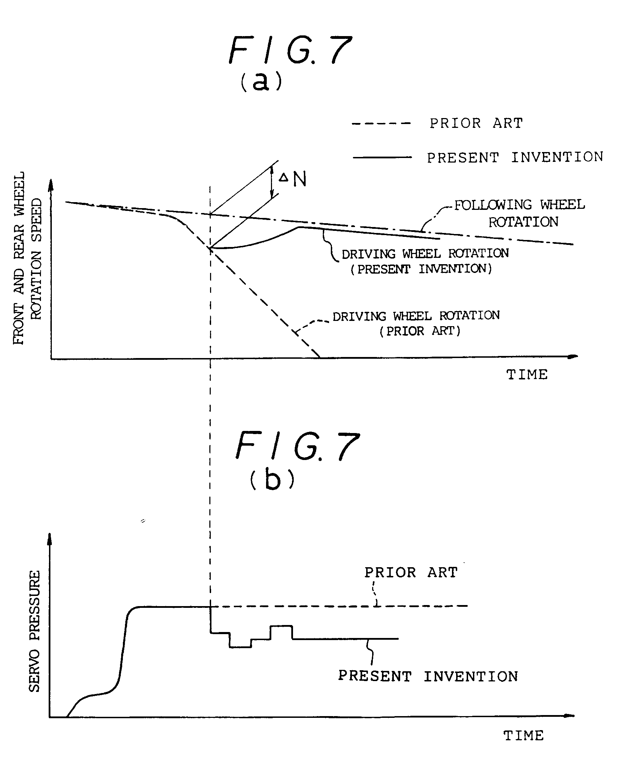

It is also possible to control the engine-brake pressure based on rotation difference between the front and rear wheels by calculating the difference in the control unit C to which the signals from the front wheel rotation sensor 48 and the rear wheel rotation sensor 49 are designed to be input. Namely, as shown in Figs. 7(a), (b), in the case that the engine-brake is actuated on a road having low coefficient of friction such as a snow covered road, conventionally, though the driving wheel slips, a skid state occurs due to a constant servo pressure. On the other hand, in the present embodiment, when the driving wheel slips causing rotational difference Δ N between the driving wheel and the following wheels, the servo pressure is reduced by a certain amount to reduce the engine-brake torque working to the driving wheels. Thus, occurrence of slip of the driving wheels is prevented.

At the reverse range; the over-drive clutch CO, the one-way clutch FO, the direct clutch C2 and the first & reverse brake B3 are engaged, other elements all being released. Accordingly, the over-drive planetary gear unit 17 is under the direct operating condition, and in the main transmission unit 21, rotation of the input shaft 26 is directly transmitted to the sun gear 30 through the clutch C2. As the carrier 33 is restrained by the brake B3, the rotation of the sun gear 30 is transmitted to the ring gear 35 as reverse rotation through the pinion 32 which rotates, and thus the output shaft 27 rotates reversely.

When the manual valve 51 is shifted to the R range, if a vehicle speed is over a certain level, for example 7 km/h, the solenoid valve S2 is ON, so the direct clutch C2 is released, and as a result, no reverse running condition occurs.

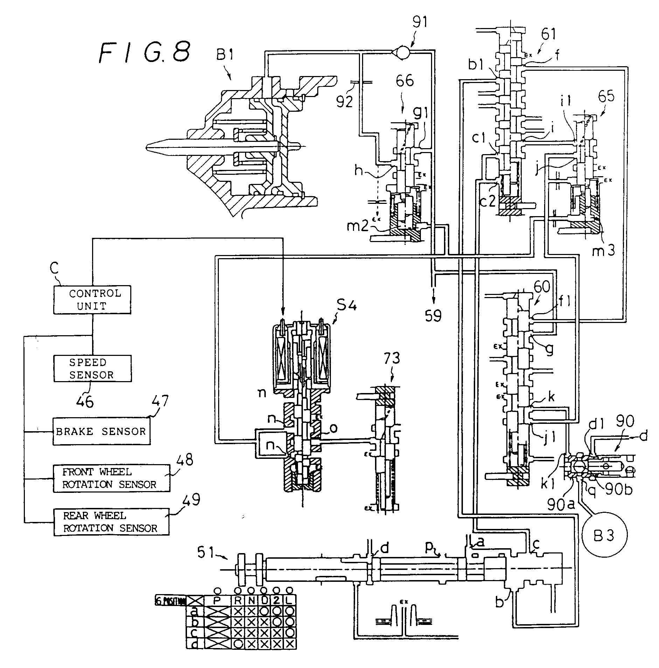

Next, an embodiment which is a partial modification of the above-stated embodiment is explained along with Fig. 8.

In this embodiment, regulated hydraulic pressure from the linear solenoid valve S4 is invariably applied without an accumulator control valve. Certain hydraulic pressure is invariably applied to the control chambers m2, m3 of the modulator valves from the ports n, n of the linear solenoid valve S4. Based on the speed sensor 46 which detects speed change, the solenoid valve S4 is controlled to regulate the control pressure, and the regulated hydraulic pressure which is reduced by a certain amount is applied to the control chamber m2 of the second-coast modulator valve 66 and the control chamber m3 of the low-coast modulator valve 65.

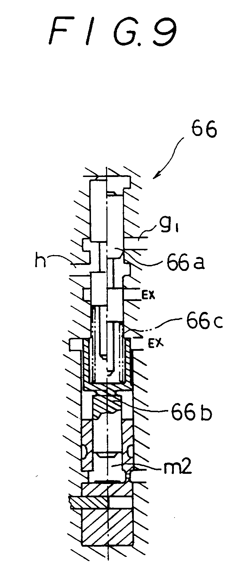

Furthermore, Fig.9 shows an embodiment in which the second modulator valve is modified.

In the second modulator valve 66 shown in Fig.9, a plug 66b, not a part of a spool 66a, is provided. Spring 66c is compressedly situated between the spool 66a and the plug 66b. A travelling distance of the plug 66b is limited in that one end of the plug 66b contacts the valve body.

Consequently, even if the control pressure led to the control chamber m2 becomes high, the end of the plug 66b contacts the valve body, so that the regulated pressure from the port h, or the hydraulic pressure applied to the second-coast brake hydraulic pressure servo Bl is not reduced any more. By this operation, the reduced and constant brake pressure (F) shown in Fig.6 is easily obtained.

In the above embodiments, explanation is stated to be about an automatic transmission having the over-drive planetary gear unit 17, or sub-transmission unit. In addition to this arrangement, the engine-brake control device is also applicable to an automatic transmission without the above sub-transmission unit.

In the above embodiments, explanation is also stated to be about a Simpson type transmission unit, but is not limited to this type, because the engine-brake control device is also applicable to the Ravigneaux type transmission unit.

The technical advantages of the preferred embodiment will now be summarised.

As explained, the modulator valves (65), (66) are hydraulically connected to the hydraulic servos (Bl), (B3) of brakes which directly restrain certain elements of the transmission gear mechanism (3). These modulator valves are controlled by the pressure control valve (linear solenoid valve S4). Further, the pressure control valve (S4) is controlled by the control unit (C) which sends signals based on vehicle running conditions. Because of this arrangement, the engine-brake is adequately actuated by the precise control of the pressure control valve (S4), so that the operation is easy and riding comfort is enhanced.

In the case that the hydraulic pressure of servos (Bl), (B3) is controlled in accordance with vehicle speed based on the speed sensor (46) (refer to the lines E, G in Fig.6); an adequate engine-brake force is provided when vehicle inertia is reduced with slow down of vehicle speed, so that the engine-brake force is not changed sharply.

Furthermore, under the provision that signals are sent from the foot brake sensor (47) to the control unit (C), when the engine-brake is actuated, the hydraulic servo pressure which varies in accordance with vehicle speed is set to be low, even when the foot brake and the engine-brake are actuated at the same time, whereby locking of the wheels is prevented.

In the case that the signals of the front and rear wheel rotation sensors (48), (49) are sent to the control unit (C) to control the solenoid valve (S4), the occurrence of slip is prevented when the engine-brake is actuated. In particular, in the case that the hydraulic pressure of the servos is set to be low when the rotational difference between the front and rear wheels is high, while the hydraulic pressure of the servos is set to be high when the rotational difference is small; skid is prevented when the engine-brake is actuated on roads having low coefficient of friction.

Furthermore, in the case that the modulator valves (66), (65) are controlled by the accumulator control valve (72) which is controlled by the pressure control valve (S4); accumulator back pressure control also functions without adding other control means.

## Claims

1. An engine brake control device in an automatic transmission of a vehicle having a transmission mechanism (21) including a plurality of gear elements, a brake (B1, B3) operative to engage and restrain one of said elements to effect an engine brake, a hydraulic servo (B1, B3) associated with said brake for controlling said brake to engage and release said one of said elements, and a shift valve (60, 61) operatively hydraulically connected to said servo for allowing hydraulic fluid to be supplied to or drained from said servo, said engine brake control device controlling the force at which the brake is controlled by the hydraulic servo to engage said one of said elements and effect the engine brake, said device comprising:
a modulator valve (66, 65) operatively hydraulically connected between said shift valve and said hydraulic servo for modulating the pressure of hydraulic fluid supplied to said servo from said shift valve;
a pressure control valve (S4) operatively hydraulically connected to said modulator valve for providing a selective control of the modulator valve that establishes the modulated pressure of the hydraulic fluid supplied to said servo from said shift valve;
first sensor means (46-49) for sensing one running condition of the vehicle and for issuing signals indicative of said one running condition;
second sensor means (46-49) for sensing another running condition of the vehicle and for issuing signals indicative of said another running condition; and
an electronic control unit (C) operatively connected to said pressure control valve and to said first and said second sensor means for receiving the signals issued by said first and said second sensor means, and for issuing signals based on the signals received to said pressure control valve which control said pressure control valve to provide the selective control of said modulator valve;
characterised in that said first and said second sensor means sense running conditions of the vehicle from the group including the speed of the vehicle (46), the application of a foot brake (47) in the vehicle, and the state of rotation of wheels (48, 49) in the vehicle.

2. An engine brake control device in an automatic transmission as claimed in claim 1, wherein said modulator valve (66, 65) includes an input port (g1, i1) in hydraulic communication with said shift valve, an output port (h, j) in hydraulic communication with said hydraulic servo, a spool movable between respective positions at which said input and said output ports are open to and closed from one another, a spring for biasing the spool in one direction, a first chamber open to said output port at a location adjacent the spool at which pressure in the first chamber acts on the spool against said spring, and a second chamber (m2, m3) in hydraulic communication with said pressure control valve at a location adjacent the spool at which pressure in the second chamber acts on the spool with said spring.

3. An engine brake control device in an automatic transmission as claimed in claim 1, wherein said modulator valve includes an input port in hydraulic communication with said shift valve, an output port in hydraulic communication with said hydraulic servo, a spool (66a) movable between respective positions at which said input and said output ports are open to and closed from one another, a movable plug (66b), a spring (66c) extending between said plug and said spool, a first chamber open to said output port at a location adjacent the spool at which pressure in the first chamber acts on the spool against said spring, and a second chamber in hydraulic communication with said pressure control valve at a location adjacent the spool at which pressure in the second chamber also acts against said spring, one end of said plug (66b) contacting a valve body at a surface thereof which limits movement of said plug within said valve body.

4. An engine brake control device in an automatic transmission as claimed in any preceding claim, wherein said pressure control valve (S4) is a linear solenoid valve.

5. An engine brake control device in an automatic transmission as claimed in any preceding claim, wherein said first sensor means (46) senses the speed of the vehicle, and said control unit controls said pressure control valve to provide a selective control of said modulator valve in which said modulator valve modulates the pressure of the hydraulic fluid supplied to said servo to a high pressure when the vehicle is travelling at a speed greater than a predetermined speed and to a low pressure that is less than said high pressure when the vehicle is travelling at a speed that is less than said predetermined speed.

6. An engine brake control device in an automatic transmission as claimed in claim 5, wherein said second sensor means (47) senses the application of a foot brake in the vehicle, and said control unit controls said pressure control valve to provide a selective control of said modulator valve in which said modulator valve modulates the pressure of the hydraulic fluid supplied to said servo to a low pressure when the application of the foot brake is sensed by said second sensor means.

7. An engine brake control device in an automatic transmission as claimed in any one of claims 1 to 4, wherein said first sensor means (48, 49) senses the state of rotation of one of the front set of wheels and the rear set of wheels in the vehicle, and said second sensor means (49, 48) senses the state of rotation of the other of the front set of wheels and the rear set of wheels.

8. An engine brake control device in an automatic transmission as claimed in claim 7, wherein said first sensor means senses the state under which a non-driven wheel rotates and said second sensor means detects the state under which a positively driven wheel of the vehicle rotates.

9. An engine brake control device in an automatic transmission as claimed in claim 7, wherein said control unit calculates a difference between the state of rotation of the front and the rear sets of wheels, and controls said pressure control valve to provide a selective control of said modulator valve in which said modulator valve modulates the pressure of the hydraulic fluid supplied to said servo to a low pressure when said difference is a large predetermined amount and to a high pressure greater than said low pressure when said difference is small compared to said predetermined amount.

10. An engine brake control device in an automatic transmission as claimed in any preceding claim, wherein an accumulator control valve (72) is operatively hydraulically connected between said modulator valve and said pressure control valve.

## Patentansprüche

1. Motorbremssteuervorrichtung in einem automatischen Getriebe eines Fahrzeugs mit einem Getriebemechanismus (21), mit einer Vielzahl von Zahnradelementen, eine Bremse (B1, B3) die betrieblich dazu vorgesehen ist, mit einem dieser Elemente in Eingriff zu gelangen und dieses zu hemmen, um eine Motorbremse zu bewirken, eine der Bremse zugeordnete hydraulische Servoeinrichtung (B1, B3) zum Steuern der Bremse, um diese mit dem einen der Elemente in Eingriff zu bringen und von diesem zu lösen, und ein Schaltventil (60, 61), das betrieblich hydraulisch mit der Servoeinrichtung verbunden ist, um zu ermöglichen, daß Hydraulikfluid zu der Servoeinrichtung zugeführt oder von dieser abgeführt wird, wobei die Motorbremssteuervorrichtung die Kraft steuert, mit der die Bremse durch die Hydraulikservoeinrichtung gesteuert ist, um mit einem dieser Elemente in Eingriff zu gelangen und die Motorbremse zu betätigen, wobei die Vorrichtung aufweist:
ein Modulatorventil (66, 65) das betrieblich hydraulisch verbunden ist zwischen dem Schaltventil und der Hydraulikservoeinrichtung zum Modulieren des Druckes des Hydraulikfluids, das der Servoeinrichtung von dem Schaltventil zugeführt wird;
ein Drucksteuerventil (S4), das betrieblich hydraulisch verbunden ist mit dem Modulatorventil zum Bereitstellen einer selektiven Steuerung des Modulatorventils, das den modulierten Druck des Hydraulikfluids herstellt, das von dem Schaltventil der Servoeinrichtung zugeführt wird;
eine erste Sensoreinrichtung (46-49) zum Erfassen eines Fahrzustandes des Fahrzeugs und zum Ausgeben von Signalen, die diesen einen Fahrzustand angeben;
eine zweite Sensoreinrichtung (46-49) zum Erfassen eines anderen Fahrzustandes des Fahrzeugs und zum Ausgeben von Signalen, die diesen anderen Fahrzustand angeben; und
eine elektronische Steuereinheit (C), die betrieblich mit dem Drucksteuerventil und der ersten und der zweiten Sensoreinrichtung verbunden ist, um die Signale zu empfangen, die von der ersten und der zweiten Sensoreinrichtung ausgegeben werden, und zum Ausgeben von auf den empfangenen Signalen basierenden Signalen an das Drucksteuerventil, die das Drucksteuerventil dahingehend steuern, eine selektive Steuerung des Modulatorventils bereitzustellen;
dadurch gekennzeichnet, daß die erste und zweite Sensoreinrichtung Fahrzustände des Fahrzeugs aus der Gruppe erfassen, die die Geschwindigkeit des Fahrzeugs (46), die Betätigung einer Fußbremse (47) des Fahrzeugs und den Rotationszustand der Räder (48, 49) des Fahrzeugs beinhaltet.

2. Motorbremssteuervorrichtung in einem automatischen Getriebe nach Anspruch 1, wobei das Modulatorventil (66, 65) beinhaltet eine Eingangsöffnung (g1, i1) in hydraulischer Verbindung mit dem Schaltventil, eine Ausgangsöffnung (h, j) in hydraulischer Verbindung mit der Hydraulikservoeinrichtung, eine Spule, die zwischen jeweiligen Stellungen bewegbar ist, in der die Eingangs- und Ausgangsöffnungen offen und geschlossen in Hinblick aufeinander sind, eine Feder zum Belasten der Spule in einer Richtung, eine erste Kammer, die zu der Ausgangsöffnung an einer Stelle in der Nähe der Spule offen ist, an der Druck in der ersten Kammer auf die Spule entgegen der Feder wirkt, und eine zweite Kammer (m2, m3) in hydraulischer Verbindung mit dem Drucksteuerventil an einer Stelle in der Nähe der Spule, an der Druck in der zweiten Kammer auf die Spule zusammen mit der Feder wirkt.

3. Motorbremssteuervorrichtung in einem automatischen Getriebe nach Anspruch 1, wobei das Modulatorventil beinhaltet eine Eingangsöffnung in hydraulischer Verbindung mit dem Schaltventil, eine Ausgangsöffnung in hydraulischer Verbindung mit der Hydraulikservoeinrichtung, eine Spule (66a), die bewegbar ist zwischen jeweiligen Stellungen, in der die Eingangs- und Ausgangsöffnung zueinander offen und geschlossen sind, einen bewegbaren Bolzen (66b), eine Feder (66c), die sich zwischen dem Bolzen und der Spule erstreckt, eine erste Kammer, die zu der Ausgangsöffnung an einer Stelle in der Nähe der Spule offen ist, an der Druck in der ersten Kammer auf die Spule gegen die Feder wirkt, und eine zweite Kammer in hydraulischer Verbindung mit dem Drucksteuerventil an einer Stelle in der Nähe der Spule, an der Druck in der zweiten Kammer ebenfalls gegen die Feder wirkt, wobei ein Ende des Bolzens (66b) ein Ventilgehäuse an einer Fläche hiervon berührt, die die Bewegung des Bolzens innerhalb des Ventilgehäuses begrenzt.

4. Motorbremssteuervorrichtung in einem automatischen Getriebe nach einem der vorstehenden Ansprüche, wobei das Drucksteuerventil (S4) ein lineares Solenoidventil ist.

5. Motorbremssteuervorrichtung in einem automatischen Getriebe nach einem der vorstehenden Ansprüche, wobei die erste Sensoreinrichtung (46) die Geschwindigkeit des Fahrzeugs erfaßt und die Steuereinheit das Drucksteuerventil dahingehend steuert, eine selektive Steuerung des Modulatorventils bereitzustellen, in der das Modulatorventil den Druck des Hydraulikfluids, das der Servoeinrichtung zugeführt wird, zu einem hohen Druck moduliert, wenn das Fahrzeug mit einer Geschwindigkeit fährt, die größer ist als eine vorbestimmte Geschwindigkeit, und zu einem niedrigen Druck, der geringer ist als der hohe Druck, wenn das Fahrzeug mit einer Geschwindigkeit fährt, die niedriger ist als die vorbestimmte Geschwindigkeit.

6. Motorbremssteuervorrichtung in einem automatischen Getriebe nach Anspruch 5, wobei die zweite Sensoreinrichtung (47) die Betätigung einer Fußbremse in dem Fahrzeug erfaßt und die Steuereinrichtung das Drucksteuerventil dahingehend steuert, eine selektive Steuerung des Modulatorventils bereitzustellen, in der das Modulatorventil den Druck des Hydraulikfluids, das der Servoeinrichtung zugeführt wird, zu einem niedrigen Druck moduliert, wenn die Betätigung der Fußbremse durch die zweite Sensoreinrichtung erfaßt wird.

7. Motorbremssteuervorrichtung in einem automatischen Getriebe nach einem der Ansprüche 1 bis 4, wobei die erste Sensoreinrichtung (48, 49) den Rotationszustand der Vorderräder oder der Hinterräder des Fahrzeugs erfaßt und die zweite Sensoreinrichtung (49, 48) entsprechend den Zustand der Hinterräder bzw. der Vorderräder erfaßt.

8. Motorbremssteuervorrichtung in einem automatischen Getriebe nach Anspruch 7, wobei die erste Sensoreinrichtung den Zustand erfaßt, in dem sich ein nichtangetriebenes Rad dreht, und die zweite Sensoreinrichtung den Zustand erfaßt, in dem sich ein zwangsweise angetriebenes Rad des Fahrzeugs dreht.

9. Motorbremssteuervorrichtung in einem automatischen Getriebe nach Anspruch 7, wobei die Steuereinrichtung einen Unterschied zwischen dem Rotationszustand der Vorder- und der Hinterräder berechnet und das Drucksteuerventil dahingehend steuert, eine selektive Steuerung des Modulatorventils bereitzustellen, in der das Modulatorventil den Druck des Hydraulikfluids, das der Servoeinrichtung zugeführt wird, zu einem niedrigen Druck moduliert, wenn der Unterschied ein großer vorbestimmter Betrag ist, und zu einem hohen Druck, der größer ist als der niedrige Druck, wenn der Unterschied klein ist verglichen mit dem vorbestimmten Betrag.

10. Motorbremssteuervorrichtung in einem automatischen Getriebe nach einem der vorstehenden Ansprüche, wobei ein Druckspeichersteuerventil (72) betrieblich hydraulisch verbunden ist zwischen dem Modulatorventil und dem Drucksteuerventil.

## Revendications

1. Dispositif de commande de frein-moteur dans une boîte de vitesses automatique d'un véhicule comportant un mécanisme de boîte de vitesses (21) comprenant une pluralité d'éléments formant pignons, un frein (B1, B3) agissant de manière à venir en prise avec un premier desdits éléments et à le retenir pour effectuer un freinage par frein-moteur, un dispositif d'asservissement hydraulique (B1, B3) associé audit frein pour commander ledit frein de manière qu'il vienne en prise avec ledit premier desdits éléments et de manière qu'il le libère, et une valve (60, 61) de changement de vitesse raccordée de façon fonctionnelle hydrauliquement audit dispositif d'asservissement pour permettre au fluide hydraulique d'être envoyé audit dispositif d'asservissement ou d'en être évacué, le dispositif de commande de frein-moteur susvisé commandant la force à laquelle le frein est commandé par le dispositif d'asservissement hydraulique pour venir en prise avec ledit premier desdits éléments et pour effectuer le freinage par frein-moteur, le dispositif de commande susvisé comprenant :
une valve de modulation (66, 65) montée de façon fonctionnelle hydrauliquement entre ledit distributeur et ledit dispositif d'asservissement hydraulique pour moduler la pression du fluide hydraulique fourni audit dispositif d'asservissement à partir de ladite valve de changement de vitesse ;
une valve (S4) de commande de pression raccordée de façon fonctionnelle hydrauliquement à ladite valve de modulation pour assurer une commande sélective de la valve de modulation qui établit la pression modulée du fluide hydraulique fourni audit dispositif d'asservissement à partir de ladite valve de changement de vitesse ;
des premiers moyens formant capteurs (46-49) pour détecter une première condition de roulement du véhicule et pour émettre des signaux indicatifs de ladite première condition de roulement ;
des seconds moyens formant capteurs (46-49) pour détecter une autre condition de roulement du véhicule et pour émettre des signaux indicatifs de ladite autre condition de roulement ; et
un ensemble de commande électronique (C) relié fonctionnellement à ladite valve de commande de pression et auxdits premier et second moyens formant capteurs pour recevoir des signaux émis par lesdits premier et second moyens formant capteurs, et pour envoyer à ladite valve de commande de pression des signaux, basés sur les signaux reçus, qui commandent ladite valve de commande de pression pour assurer la commande sélective de ladite valve de modulation ;
**caractérisé** en ce que lesdits premiers et seconds moyens formant capteurs détectent les conditions de roulement du véhicule à partir du groupe de paramètres comprenant la vitesse du véhicule (46), le serrage d'un frein (47) actionné au pied dans le véhicule, et l'état de rotation des roues (48, 49) du véhicule.

2. Dispositif de commande de frein-moteur dans une boite de vitesses automatique selon la revendication 1, dans lequel ladite valve de modulation (66, 65) comprend un orifice d'entrée (g1, i1) en communication hydraulique avec ladite valve de changement de vitesse, un orifice de sortie (h, j) en communication hydraulique avec ledit dispositif d'asservissement hydraulique, un tiroir mobile entre des positions respectives dans lesquelles lesdits orifices d'entrée et de sortie sont en communication l'un avec l'autre et sont isolés l'un de l'autre, un ressort pour solliciter le tiroir dans une direction, une première chambre ouverte vis-à-vis dudit orifice de sortie à un endroit adjacent au tiroir où la pression régnant dans la première chambre agit sur ce tiroir à l'encontre dudit ressort, et une seconde chambre (m2, m3) en communication hydraulique avec ladite valve de commande de pression à un endroit adjacent au tiroir où la pression régnant dans la seconde chambre agit sur ce tiroir avec ledit ressort.

3. Dispositif de commande de frein-moteur dans une boîte de vitesses automatique selon la revendication 1, dans lequel ladite valve de modulation comprend un orifice d'entrée en communication hydraulique avec ladite valve de changement de vitesse, un orifice de sortie en communication hydraulique avec ledit dispositif d'asservissement hydraulique, un tiroir (66a) mobile entre des positions respectives dans lesquelles lesdits orifices d'entrée et de sortie sont en communication l'un avec l'autre et sont isolés l'un de l'autre, un obturateur mobile (66b), un ressort (66c) s'étendant entre ledit obturateur et ledit tiroir, une première chambre ouverte vis-à-vis dudit orifice de sortie à un endroit adjacent au tiroir où la pression régnant dans la première chambre agit sur ce tiroir à l'encontre dudit ressort, et une seconde chambre en communication hydraulique avec ladite valve de commande de pression à un endroit adjacent au tiroir où la pression régnant dans la seconde chambre agit également à l'encontre dudit ressort, une première extrémité dudit obturateur (66b) venant en contact avec un corps de valve à une surface de celui-ci qui limite le déplacement dudit obturateur à l'intérieur dudit corps de valve.

4. Dispositif de commande de frein-moteur dans une boîte de vitesses automatique selon l'une quelconque des revendications précédentes, dans lequel ladite valve (S4) de commande de pression est une électrovanne linéaire.

5. Dispositif de commande de frein-moteur dans une boîte de vitesses automatique selon l'une quelconque des revendications précédentes, dans lequel ledit premier capteur (46) détecte la vitesse du véhicule et ledit ensemble de commande commande ladite valve de commande de pression pour assurer une commande sélective de ladite valve de modulation, selon laquelle cette valve de modulation module la pression du fluide hydraulique fourni audit dispositif d'asservissement de manière qu'elle prenne une valeur élevée lorsque le véhicule se déplace à une vitesse supérieure à une vitesse prédéterminée et une valeur faible qui est inférieure à ladite valeur élevée lorsque le véhicule se déplace à une vitesse qui est inférieure à ladite vitesse prédéterminée.

6. Dispositif de commande de frein-moteur dans une boîte de vitesses automatique selon la revendication 5, dans lequel ledit second moyen formant capteur (47) détecte le serrage du frein actionné au pied dans le véhicule, et ladite unité de commande commande ladite valve de commande de pression pour assurer une commande sélective de ladite valve de modulation, selon laquelle ladite valve de modulation module la pression du fluide hydraulique fourni audit dispositif d'asservissement de manière qu'elle prenne une valeur faible lorsque le serrage du frein actionné au pied est détecté par ledit second moyen formant capteur.

7. Dispositif de commande de frein-moteur dans une boîte de vitesses automatique selon l'une quelconque des revendications 1 à 4, dans lequel lesdits premiers moyens formant capteurs (48, 49) détectent l'état de rotation de l'un des ensembles avant et arrière de roues de véhicule et lesdits seconds moyens formant capteurs (49, 48) détectent l'état de rotation de l'autre des ensembles avant et arrière de roues.

8. Dispositif de commande de frein-moteur dans une boîte de vitesses automatique selon la revendication 7, dans lequel lesdits premiers moyens formant capteurs détectent l'état dans lequel une roue non motrice tourne et lesdits seconds moyens formant capteurs détectent l'état dans lequel une roue motrice du véhicule tourne.

9. Dispositif de commande de frein-moteur dans une boîte de vitesses automatique selon la revendication 7, dans lequel ledit ensemble de commande calcule la différence entre l'état de rotation des ensembles avant et arrière de roues et commande ladite valve de commande de pression pour assurer une commande sélective de ladite valve de modulation, selon laquelle ladite valve de modulation module la pression du fluide hydraulique fourni audit dispositif d'asservissement de manière qu'elle prenne une valeur faible lorsque ladite différence représente une grandeur prédéterminée importante et une valeur élevée supérieure à ladite valeur faible lorsque ladite différence est faible par rapport à ladite grandeur prédéterminée.

10. Dispositif de commande de frein-moteur dans une boîte de vitesses automatique selon l'une quelconque des revendications précédentes, dans lequel une valve (72) de commande d'accumulateur est montée de façon fonctionnelle hydrauliquement entre ladite valve de modulation et ladite valve de commande de pression.
